**Europäisches Patentamt**

**European Patent Office**

**Office européen des brevets**

(19)

(11) Veröffentlichungsnummer : **0 369 124 B1**

(12)

## EUROPÄISCHE PATENTSCHRIFT

(45) Veröffentlichungstag der Patentschrift :
**04.11.92 Patentblatt 92/45**

(51) Int. Cl.$^5$ : **B60K 17/346**

(21) Anmeldenummer : **89116302.4**

(22) Anmeldetag : **04.09.89**

(54) **Allradantrieb für ein Kraftfahrzeug.**

(30) Priorität : **15.10.88 DE 3835224**

(43) Veröffentlichungstag der Anmeldung :
**23.05.90 Patentblatt 90/21**

(45) Bekanntmachung des Hinweises auf die
Patenterteilung :
**04.11.92 Patentblatt 92/45**

(84) Benannte Vertragsstaaten :
**DE ES FR GB IT NL SE**

(56) Entgegenhaltungen :
**EP-A- 0 216 318**
**EP-A- 0 230 561**

(56) Entgegenhaltungen :
**EP-A- 0 274 167**
**FR-A- 2 609 137**
**US-A- 3 605 963**
**US-A- 3 899 938**
**US-A- 4 718 303**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Müller, Robert, Dipl.-Ing.**
**Badstrasse 21**
**W-7251 Mönsheim (DE)**
Erfinder : **Weller, Gerhard, Dipl.-Ing.**
**Suedmaehrer Strasse 21**
**W-7133 Maulbronn (DE)**

**Beschreibung**

Die Erfindung betrifft einen Allradantrieb für ein Kraftfahrzeug nach dem Oberbegriff des Anspruchs 1.

Aus EP-A 0 216 318 ist ein Allradantrieb bekannt, dessen Sperrsystem aus einem Planetengetriebe und einem seinem Planetenträger reibschlüssig andrückbaren Lamellenpaket besteht. Die als Hohlwelle ausgebildete erste Ausgangswelle des Sperrsystems liegt konzentrisch zur Eingangswelle; zu ihr koaxial liegt die zweite Ausgangswelle. Die Eingangswelle und die beiden Ausgangswellen sind in Lagern eines feststehenden Gehäuses gelagert.

Es ist die Aufgabe der Erfindung einen solchen Allradantrieb räumlich kompakter zu gestalten.

Zur Lösung dieser Aufgabe dienen die kennzeichnenden Merkmale des Anspruchs 1. Wenn die Eingangswelle als Hohlwelle ausgebildet ist und an ihr die erste Ausgangswelle gelagert ist und die zweite Ausgangswelle in der ersten Ausgangswelle gelagert ist, läßt sich ein Allradantrieb auf engstem Raum unterbringen, da gehäusefeste Lager für die Eingangswelle und die Ausgangswellen entbehrlich sind. Durch geeignete Bemessung des Planetenrad-Verteilergetriebes und der Lamellenbremse können beide Komponenten etwa gleichen Außendurchmesser haben und mit engem radialen und axialen Spiel von einem zylindrischen Sperrengehäuse umschlossen sein. Der Kraftfluß geht von der Eingangswelle auf das Sperrengehäuse und dem zu ihm drehfesten Planetenträger. Die am Planetenträger gelagerten Planetenräder stehen einerseits mit dem zur ersten Ausgangswelle drehfesten Hohlrad, andererseits mit dem auf der zweiten Ausgangswelle drehfesten Sonnenrad in Eingriff. Je nach Wahl der Übersetzungen am Planetengetriebe erfolgt eine Momentaufteilung auf die beiden zur Hinterachse bzw. zur Vorderachse führenden Ausgangswellen des Allrad-Sperrsystems. Als besonders vorteilhaft hat sich eine Momentaufteilung 31/69 (vorne/hinten) ergeben. Nach Erreichen einer vorgegebenen Schlupfdifferenz wird durch Betätigen der Lamellenbremse das Antriebsmoment von der Achse mit dem höheren Schlupf zur anderen Achse umverteilt.

Weitere, die Erfindung ausgestaltende Merkmale, die die Lagerung und Ölführung im Allrad-Sperrsystem beinhalten sind in den weiteren Unteransprüchen enthalten.

Ein Ausführungsbeispiel der Erfindung ist in der Zeichnung dargestellt und wird nachfolgend erläutert.

Es zeigt:

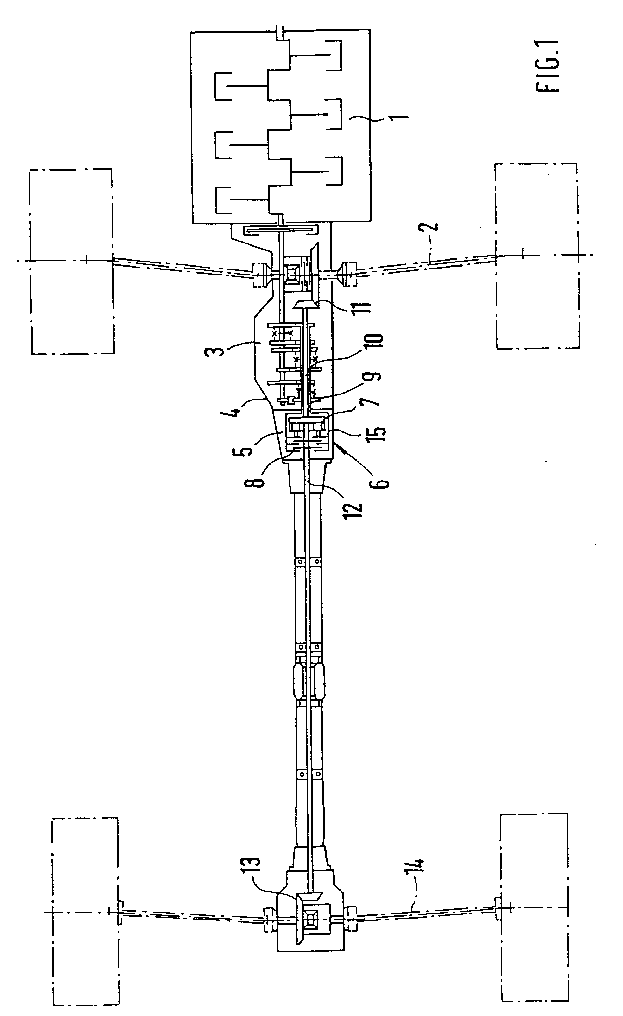

Fig. 1 schematische Darstellung eines Allradantriebs eines Kraftfahrzeugs,

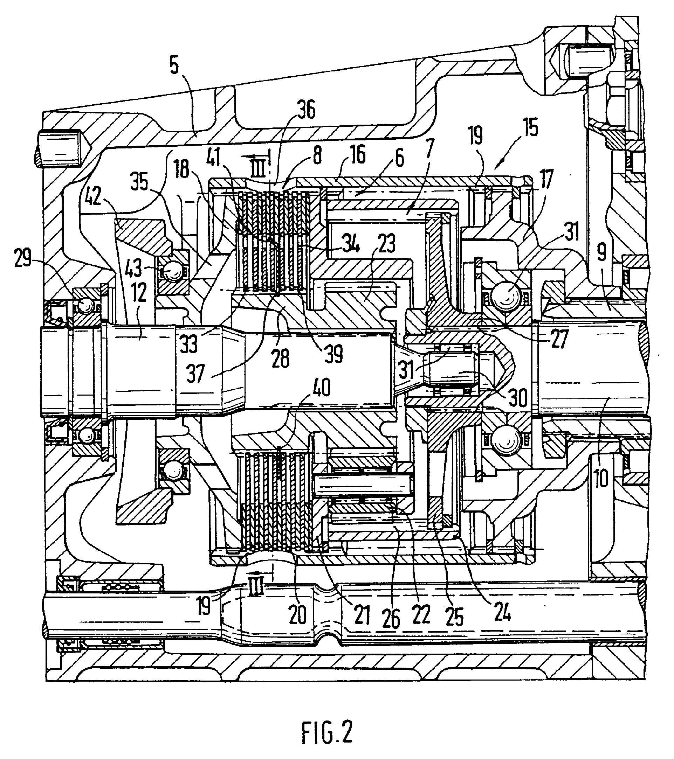

Fig. 2 Längsschnitt durch ein Allrad-Sperrsystem,

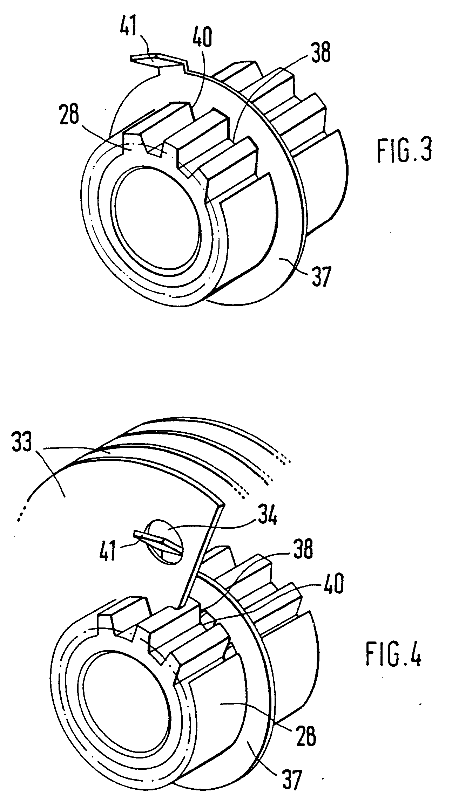

Fig. 3 Querschnitt nach Linie III-III der Fig. 2 - 1. Montagebild

Fig. 4 Querschnitt nach Linie III-III der Fig. 2 - 2. Montagebild

Im Heck eines Kraftfahrzeugs ist ein Verbrennungsmotor 1 angeordnet, und treibt ein im Bereich der Hinterachse 2 liegendes Gangschaltgetriebe 3 an, dessen Getriebegehäuses 4 am Motorgehäuse angeflanscht ist. In einer am Getriebegehäuse 4 angeschraubten Gehäusekappe 5 ist ein Allradsperrsystem 6 untergebracht, das aus einem Planetenrad-Verteilergetriebe 7 und einem Lamellenpaket 8 besteht. Eine als Hohlwelle ausgebildete Abtriebswelle des Gangschaltgetriebes 2 dient als Eingangswelle 9 des Sperrsystems 6. Eine konzentrisch durch sie hindurchgehende erste Ausgangswelle 10 geht vom Sperrsystem 6 ab und führt zu einem Kegelrad-Tellerrad-Winkeltrieb 11 der Hinterachse 2. Eine zweite Ausgangswelle 12 treibt einen Kegelrad-Tellerrad-Winkeltrieb 13 der Vorderachse 14 an.

Das Planetenrad-Verteilergetriebe 7 und das Lamellenpaket 8 sind von einem Sperrengehäuse 15 eng umschlossen. Es ist aus einem außen glatten zylindrischen Mantelteil 16, einem in ihm befestigten Lagerdeckel 17 und einer an seiner anderen Seite drehfesten und längsbeweglichen Druckplatte 18 zusammengesetzt. Der Lagerdeckel 17 und die Druckplatte 18 greifen in eine Innenverzahnung 19 des Mantelteils 16 ein, in der auch die Außenlamellen 20 und der Planetenträger 21 drehfest gehalten sind. Da der Lagerdeckel 17 auf der hohlen Eingangswellee 9 befestigt ist, wird ihre Drehbewegung über das Sperrengehäuse 15 auf den Planetenträger 21 und von den mit ihm umlaufenden Planetenrädern 22 einerseits auf das Sonnenrad 23, andererseits auf das Hohlrad 24 übertragen. Das Hohlrad 24 steht in Drehverbindung mit der zur Hinterachse 2 führenden ersten Ausgangswelle 10 über eine Kupplungsplatte 25, die mit ihrem Außenrand in der Verzahnung 26 des Hohlrades gehalten ist und mit ihrer Nabe 27 auf einer Kerbverzahnung der ersten Ausgangswelle 10 befestigt ist.

Das Sonnenrad 23 ist mit einer die Innenlamellen 33 tragenden Kupplungshülse 28 als einstückiges Bauteil gestaltet und auf einer Kerbverzahnung der die Vorderachse 14 des Kraftfahrzeugs antreibenden zweiten Ausgangswelle 12 drehfest gehalten. Die zweite Ausgangswelle 12 ist an ihrer einen Seite an einem Kugellager 29 der Gehäusekappe 5, an ihrer anderen Seite mit einem zentrischen Zapfen 30 in einem Nadellager 31 der ersten Ausgangswelle 10 gelagert. Die erste Ausgangswelle 10 ist endseitig in einen im Lagerdeckel 17 gehaltenen Vierpunktlager 32 gelagert. Mit diesem Vierpunktlager 32 werden die von dem Winkeltrieb 11 augehenden Axialkräfte auf die erste Ausgangswelle 10 abgestützt. Eine axiale Verschiebung der ersten Ausgangswelle 10 gegenüber der Eingangswelle 9 wird verhindert.

Um eine ausreichende Ölschmierung des Lamellenpakets 8 zu gewährleisten, sind alle Innenlamellen 33 und Außenlamellen 20 mit durchgehenden, zueinander fluchtenden Axialbohrungen 34 versehen. Da auch die Druckplatte 18 mehrere Axialbohrungen 35 aufweist, kann Schmieröl durch die Axialbohrungen 35 und 34 hindurch in das Lamellenpaket eindringen. Begünstigt wird der Ölfluß durch radiale Durchbrüche 36, die im Bereich des Lamellenpakets 8 im Mantelteil 16 angebracht sind und bei umlaufendem Sperrengehäuse 15 einen durch Fliehkraft bedingten radialen Ölausfluß in die Gehäuseklappe 5 ermöglichen.

Zur axialen Fixierung des Sonnenrades 23 und der Kupplungshülse 28 auf der zweiten Ausgangswelle 12 dient eine Arretierscheibe 37. Zur Montage wird sie mit ihrer Innenverzahnung 38 zwischen der Außenverzahnung 39 der Kupplungshülse 28 bis zu einer Ringnut 40 hindurchgeschoben, sodann in der Ringnut 40 so verdreht, daß die Zähne der Kupplungsscheibe 28 bündig zu den Zähnen der Arretierscheibe 37 stehen. In dieser Lage wird ihr umgebördelter Außenrand 41 in eine Axialbohrung 34 einer mittleren Lamelle eingehängt.

Die Übersetzungen im Planetenrad-Verteilergetriebe 7 sind so gewählt, daß sich eine Antriebsmomentverteilung Vorderachse/Hinterachse von 31/69 ergibt. Wird eine bestimmte Schlupfdifferenz der Vorderachse 14 zur Hinterachse 2 erreicht, so wird hydraulisch über einen Einrückhebel 42 und ein auf der Druckplatte 18 zentriertes Einrücklager 43 das Lamellenpaket 8 zusammengedrückt und an den Planetenträger 21 reibschlüssig angelegt, so daß das Planetenrad-Verteilergetriebe 7 schlupfabhängig gesperrt wird. Somit wird das Antriebsmoment von der Achse mit dem höheren Schlupf auf die andere Achse umverteilt.

**Patentansprüche**

1. Allradantrieb für ein Kraftfahrzeug, mit einem im Antriebsstrang Hinterachse-Vorderachse (2-14) angeordneten Sperrsystem (6), das aus einem Planetenrad-Verteilergetriebe (7) mit einem Sonnenrad (23), an einem Planetenträger (21) gelagerten Planetenrädern (22) und einem Hohlrad (24) sowie einem am Planetenträger (21) reibschlüssig andrückbaren Lamellenpaket (8) aus Innenlamellen (33) und Außenlamellen (20) besteht, wobei der Planetenträger (21) gegenüber einer das Planetenrad-Verteilergetriebe (7) antreibenden Eingangswelle (9) des Sperrsystems (6) drehfest ist, das Hohlrad (24) mit einer ersten, zur Eingangswelle (9) konzentrischen Ausgangswelle (10) und das Sonnenrad (23) mit einer zweiten Ausgangswelle (12) drehfest verbunden ist, dadurch gekennzeichnet, daß die Eingangswelle (9) als Hohlwelle ausgebildet ist, daß in ihr die erste Ausgangswelle (10) drehbar gelagert ist und daß die zweite Ausgangswelle (12) in der ersten Ausgangswelle (10) gelagert ist.

2. Allradantrieb nach Anspruch 1, dadurch gekennzeichnet, daß das Lamellenpaket (8) und das Planetenrad-Verteilergetriebe (7) von einem zylindrischen Sperrengehäuse (15) mit geringem radialen und axialen Spalt umschlossen sind.

3. Allradantrieb nach Anspruch 2, dadurch gekennzeichnet, daß das Sperrengehäuse (15) aus einem zylindrischen Mantelteil (16), einem an seiner einen Seite und zugleich auf der Eingangswelle (9) befestigten Lagerdeckel (17) zur Lagerung der ersten Ausgangswelle (10) und einem an seiner anderen Seite drehfesten, am Lamellenpaket (8) mit einem Einrücklager (43) und einem Einrückhebel (42) andrückbaren Druckplatte (18) zusammengesetzt ist.

4. Allradantrieb nach Anspruch 1, dadurch gekennzeichnet, daß das Hohlrad (24) mittels einer in seiner Verzahnung (26) befestigten, stirnseitigen Kupplungsplatte (25) mit der ersten Ausgangswelle (10) verbunden ist.

5. Allradantrieb nach Anspruch 1, dadurch gekennzeichnet, daß die zweite Ausgangswelle (12) mit einem zentrischen, endseitigen Zapfen (30) in einem Nadellager (31) der ersten Ausgangswelle (10) und an der andere Seiten in einem Kugellager (29) einer das Sperrengehäuse (15) umschließenden, am Getriebegehäuse (4) angeflanschten Gehäusekappe (5) gelagert ist.

6. Allradantrieb nach Anspruch 1 und 5, dadurch gekennzeichnet, daß alle Innenlamellen (33) und Außenlamellen (20) zueinander fluchtende Axialbohrungen (34) aufweisen, die einen Ölstrom von dem Einrücklager (33) durch Axialbohrungen (35) der Druckplatte (18) hindurch zu dem Lamellenpaket (8) ermöglichen.

7. Allradantrieb nach Anspruch 6, dadurch gekennzeichnet, daß im Mantelteil (16) des Sperrengehäuses (5) im Bereich des Lamellenpakets (8) radiale Durchbrechungen (36) vorgesehen sind.

8. Allradantrieb nach Anspruch 1 und 3, dadurch gekennzeichnet, daß der Lagerdeckel (17) zur Lagerung der ersten Ausgangswelle (10) ein axial belastbares Vierpunktlager (32) enthält.

9. Allradantrieb nach Anspruch 1 und 5, dadurch gekennzeichnet, daß auf der zweiten Ausgangswelle (12) nebeneinander das Sonnenrad (23) und eine Kupplungshülse (28) zur drehfesten Mitnahme der Innenlamellen (33) drehfest sind.

10. Allradantrieb nach Anspruch 9, dadurch gekennzeichnet, daß die Kupplungshülse (28) und das Sonnenrad (23) einstückig ausgebildet sind.

11. Allradantrieb nach Anspruch 6, 9 und 10, dadurch gekennzeichnet, daß in eine Axialbohrung (34) einer Lamelle eine Arretierscheibe (37) formschlüssig eingreift, die an ihrem Innenumfang in eine Ringnut (40) der Kupplungshülse (28) eingreift und diese sowie das Sonnenrad (23) axial fixiert.

**Claims**

1. A four-wheel drive for a motor vehicle, having a locking system (6) which is arranged in the drive line rear axle - front axle (2-14) and which comprises a planet wheel distributor gear (7) with a sun wheel (23), planet wheels (22) mounted on a planet carrier (21) and a hollow wheel (24), and a set of plates (8) which can be frictionally pressed against the planet carrier (21) and has inner plates (33) and outer plates (20), wherein the planet carrier (21) is rotationally fixed in relation to an input shaft (9) of the locking system (6) driving the planet wheel distributor gear (7), the hollow wheel (24) is connected to a first output shaft (10) concentric with the input shaft (9) and the sun wheel (23) is connected to a second output shaft (12) in a rotationally fixed manner, characterised in that the input shaft (9) is formed as a hollow shaft, in that the first output shaft (10) is rotatably mounted therein and in that the second output shaft (12) is mounted in the first output shaft (10).

2. A four-wheel drive according to claim 1, characterised in that the set of plates (8) and the planet wheel distributor gear (7) are enclosed by a cylindrical closed casing (15) with little radial and axial clearance.

3. A four-wheel drive according to claim 2, characterised in that the closed casing (15) comprises a cylindrical jacket part (16), a bearing cover (17) secured to one end of the latter and simultaneously to the input shaft (9) and for mounting the first output shaft (10), and a pressure plate (18) rotationally fixed on the other end of the said jacket part and pressable against the set of plates (8) by an engaging lever (42) and an engaging bearing (43).

4. A four-wheel drive according to claim 1, characterised in that the hollow wheel (24) is connected to the first output shaft (10) by means of a front-end clutch plate (25) secured in the toothing (26) of the said hollow wheel.

5. A four-wheel drive according to claim 1, characterised in that the second output shaft (12) with a central end journal (30) is mounted in a needle bearing (31) of the first output shaft (10) and at the other end in a ball bearing (29) of a housing cap (5) surrounding the closed casing (15) and flanged to the gearbox (4).

6. A four-wheel drive according to claims 1 and 5, characterised in that all inner plates (33) and outer plates (20) have axial bores (34) which are in alignment with each other and enable oil to flow from the engaging bearing (33) to the set of plates (8) through axial bores (35) of the pressure plate (18).

7. A four-wheel drive according to claim 6, characterised in that radial openings (36) are provided in the jacket part (16) of the closed casing (5) in the region of the set of plates (8).

8. A four-wheel drive according to claims 1 and 3, characterised in that the bearing cover (17) contains an axially loadable four-point bearing (32) for mounting the first output shaft (10).

9. A four-wheel drive according to claims 1 and 5, characterised in that on the second output shaft (12), the sun wheel (23) and a clutch sleeve (28) for carrying the inner plates (33) in a rotationally fixed manner are rotationally fixed side by side.

10. A four-wheel drive according to claim 9, characterised in that the clutch sleeve (28) and the sun wheel (23) are formed in one piece.

11. A four-wheel drive according to claims 6, 9 and 10, characterised in that a locking disk (37) engages positively in an axial bore (34) of a plate and engages on its inner circumference in an annular groove (40) of the clutch sleeve (28) and axially fixes the latter and the sun wheel (23).

**Revendications**

1. - Transmission intégrale pour un véhicule automobile, comportant un système de blocage (6) placé dans la chaîne de transmission essieu arrière - essieu avant (2 à 14), qui est constituée d'une boîte de transfert à pignon satellite (7) avec pignon planétaire (23), de pignons satellites (22) montés sur un porte-satellites (21) et d'une roue creuse (24) ainsi que d'un paquet de lamelles (8), pouvant être pressé par friction contre le porte-satellites (21), constitué de lamelles intérieures (33) et de lamelles extérieures (20), le porte-satellites (21) étant fixe en rotation par rapport à un arbre d'entrée (9) - entraînant la boîte de transfert à porte-satellites (7) -du système de blocage (6), la roue creuse (24) étant solidaire en rotation avec un premier arbre de sortie (10), concentrique à l'arbre d'entrée (9), et le pignon planétaire (23) étant solidaire en rotation d'un second arbre de sortie (12), caractérisée en ce que l'arbre d'entrée (9) est un arbre creux, en ce que le premier arbre de sortie (10) est monté tournant dans celui-ci et en ce que le second arbre de sortie (12) est monté dans le premier arbre de sortie (10).

2. - Transmission intégrale selon la revendication 1, caractérisée en ce que le paquet de lamelles (8) et la boîte de transfert à pignon satellite (7) sont entourés par un boîtier cylindre (15) avec une petite fente radiale et axiale.

3. - Transmission intégrale selon la revendication 2, caractérisée en ce que le boîtier de blocage (15) est constitué d'une partie d'enveloppe (16) cylindrique, d'un chapeau de palier (17) fixé sur l'un de ses côtés et en même temps sur l'arbre d'entrée (9), pour le montage du premier arbre de sortie (10) et d'une plaque de pression (18), solidaire en rotation sur son autre côté, pouvant être pressée contre le paquet de lamelles (8) avec un palier d'engagement (43) et un levier d'engagement (42).

4. - Transmission intégrale selon la revendication 1, caractérisée en ce que la roue creuse (24) est assemblée au premier arbre de sortie (10), au moyen d'une plaque d'accouplement (25) frontale, fixée dans sa denture (26).

5. - Transmission intégrale selon la revendication 1, caractérisée en ce que le second arbre de sortie (12) est monté avec un premier tourillon (30) terminal, centré, dans un roulement à aiguilles (31) du premier arbre de sortie (10) et sur l'autre côté, dans un roulement à billes (29) d'un capuchon de boîtier (5) entourant le boîtier (15) et bridé sur le carter (4) de la boîte de vitesses.

6. - Transmission intégrale selon les revendications 1 et 5, caractérisée en ce que toutes les lamelles intérieures (33) et les lamelles extérieures (20) présentent des alésages axiaux (34) alignés les uns avec les autres, qui permettent un passage de l'huile du palier d'engagement (33) à travers les alésages axiaux (35) de la plaque de pression (18), vers le paquet de lamelles (8).

7. - Transmission intégrale selon la revendication 6, caractérisée en ce qu'il est prévu dans la partie d'enveloppe (16) du boîtier (5), des ajours (36) radiaux, dans la zone du paquet de lamelles (8).

8. - Transmission intégrale selon les revendications 1 et 3, caractérisée en ce que le chapeau de palier (17), destiné au montage du premier arbre de sortie (10), contient un palier à quatre points (32) pouvant être sollicité axialement.

9. - Transmission intégrale selon les revendications 1 et 5, caractérisée en ce que sur le second arbre de sortie (12), le pignon planétaire (23) et un manchon d'accouplement (28) sont montés côte à côte, solidaires en rotation, pour l'entraînement en rotation des lamelles intérieures (33).

10. - Transmission intégrale selon la revendication 9, caractérisée en ce que le manchon d'accouplement (28) et le pignon planétaire (23) sont réalisés d'une seule pièce.

11. - Transmission intégrale selon les revendications 6, 9 et 10, caractérisée en ce que dans un alésage axial (34) d'une lamelles s'engage, par concordance de forme, un disque d'arrêt (37) qui, sur son pourtour intérieur, s'engage dans une rainure annulaire (40) du manchon d'accouplement (28) et fixe axialement celui-ci ainsi que le pignon planétaire (23).

FIG.2

FIG.3

FIG.4